(19) Europäisches Patentamt
European Patent Office
Office européen des brevets

(11) **EP 4 421 577 A1**

(12) **EUROPÄISCHE PATENTANMELDUNG**

(43) Veröffentlichungstag:
   **28.08.2024  Patentblatt 2024/35**

(21) Anmeldenummer: **24158526.4**

(22) Anmeldetag: **20.02.2024**

(51) Internationale Patentklassifikation (IPC):
   **G05B 19/418** *(2006.01)*     **G05B 19/4063** *(2006.01)*
   **G05B 23/02** *(2006.01)*

(52) Gemeinsame Patentklassifikation (CPC):
   **G05B 19/41875; G05B 19/4063; G05B 23/0262;**
   G05B 2219/32179; G05B 2219/37573

(84) Benannte Vertragsstaaten:
   **AL AT BE BG CH CY CZ DE DK EE ES FI FR GB
   GR HR HU IE IS IT LI LT LU LV MC ME MK MT NL
   NO PL PT RO RS SE SI SK SM TR**
   Benannte Erstreckungsstaaten:
   **BA**
   Benannte Validierungsstaaten:
   **GE KH MA MD TN**

(30) Priorität: **27.02.2023  AT 232023**

(71) Anmelder: **Pro2Future GmbH**
   **4040 Linz (AT)**

(72) Erfinder:
   • **Muaaz, Abdul Hadi**
     **8010 Graz (AT)**
   • **Milot, Gashi**
     **8010 Graz (AT)**
   • **Vignesh, Manjunath**
     **8010 Graz (AT)**
   • **Trabesinger, Stefan**
     **8010 Graz (AT)**
   • **Schmid, Johannes**
     **8010 Graz (AT)**

(74) Vertreter: **Peham, Alois**
   **Lederergasse 23/11/139**
   **1080 Wien (AT)**

(54) **VERFAHREN ZUR DETEKTION VON FEHLERN WÄHREND EINES HERSTELLUNGSPROZESSES**

(57)    Die Erfindung betrifft ein Verfahren zur Detektion von Fehlern während eines Herstellungsprozesses in Fertigungsanlagen, wobei die Fertigungsanlagen Werkzeuge zur Bearbeitung von Werkstücken umfassen, wobei Betriebsparameter der Werkzeuge während der Bearbeitung von Werkstücken kontinuierlich erfasst und aus Abweichungen der Betriebsparameter bei der Bearbeitung unterschiedlicher Werkstücke Rückschlüsse auf Fehler getroffen.

Fig.1

**Beschreibung**

Die Erfindung betrifft ein Verfahren zur Detektion von Fehlern während eines Herstellungsprozesses in Fertigungsanlagen, wobei die Fertigungsanlagen Werkzeuge zur Bearbeitung von Werkstücken umfassen.

Ein wesentlicher Aspekt zeitgemäßer Herstellungsprozesse, die beispielsweise spanabhebende Verfahren wie Fräsen, Schleifen, Bohren umfassen, ist die effiziente und möglichst vollständige Detektion fehlerhafter Produkte und deren Ausscheidung aus dem weiteren Prozess, sodass die Produktqualität und die Prozessanlagenauslastung verbessert werden.

Aus der DE 19834797 C2 sind dazu ein Verfahren und eine Vorrichtung zur zustandsabhängigen Prozessführung bei der Verarbeitung von Kunststoffen bekannt, bei dem Messprinzipien, wie die Aufnahme von dielektrischen oder akustischen Kennwerten mit Hilfe im Werkzeug angebrachter Sensoren dazu verwendet werden, den Verarbeitungsprozess kontinuierlich zu überwachen und bei Abweichungen von Sollwerten das betroffene Produkt sofort als Ausschuss zu klassifizieren und die Maschine zu stoppen.

Die Messung mittels Sensoren führt aber nicht in allen Fällen zu zuverlässigen Ergebnissen. Insbesondere sind manche Verfahren nicht während des Herstellungsprozesses selbst, sondern nur im Anschluss daran und nur an einem Teil der Produkte anwendbar.

Dies gilt insbesondere für immanente Materialfehler, wie die Einschlüsse von Fremdkörpern, Lunker, Haarrisse oder fehlerhafte Festigkeitseigenschaften, die meist nur mittels zerstörender Prüfmethoden und daher nur auf einzelne Produkte angewendet werden können.

Aber auch zerstörungsfreie Prüfmethoden wie beispielsweise akustische Resonanzanalysen oder Durchstrahlungsprüfung mittels Röntgen - oder Gammastrahlung sind in einer industriellen Fertigungsanlage nur eingeschränkt einsetzbar.

Es ist weiterhin eine automatisierte Qualitätsüberwachung basierend auf Edge Computing bekannt. Ein entsprechendes Produkt wird für Sinumerik CNC-Systeme unter der Bezeichnung Analyze MyWorkpiece/Monitor angeboten. Bei diesem System werden qualitätsrelevante Maschinendaten automatisch überwacht und Anomalien gemeldet.

Der Erfindung liegt die Aufgabe zugrunde, die Erkennung schadhafter Werstücke während des Fertigungsprozesses zu verbessern.

Erfindungsgemäß geschieht dies mit einem Verfahren gemäß Anspruch 1. Vorteilhafte Ausgestaltungen ergeben sich aus den Unteransprüchen.

Die erfindungsgemäße kontinuierliche Erfassung von Betriebsparametern der Bearbeitungswerkzeuge ist einfach und ohne Einschränkungen im Fertigungsprozess durchführbar und führt zu zuverlässigen Ergebnissen.

Gemäß der Erfindung sind keine zusätzlichen Sensoren im Werkzeug oder am Bauteil erforderlich. Die Datenaufnahme erfolgt vorzugsweise mittels Edge Device, welches hochfrequente Daten direkt aus der Maschinensteuerung bezieht.

Die Erfindung wird anhand von Figuren näher erläutert.

Es zeigen beispielhaft:

Fig. 1 ein Flussdiagramm des erfindungsgemäßen Verfahrens,
Fig. 2 schematisch den Vorgang der Fehlererkennung,
Fig. 3a, 3b den Verlauf des Drehmoments eines Antriebes eines spanabhebenden Werkzeugs in einem Fertigungsprozess.

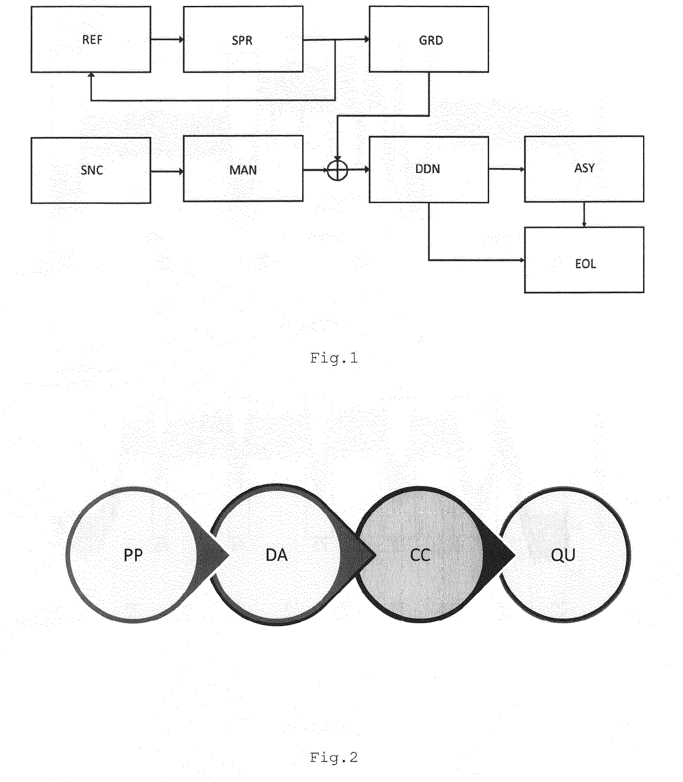

Das erfindungsgemäße Verfahren gemäß Fig. 1 beginnt in einem ersten Schritt REF mit der Bearbeitung von zumindest zwei Referenzstücken und der Erfassung SPR der zugehörigen Drehmomentverläufe der Antriebe der verwendeten Werkzeuge.

Die Ergebnisse werden in einer Referenzdatenbank GRD erfasst.

In einem regulären Bearbeitungsprozess wird vorab die Art der Bearbeitungsschritte bestimmt SNC, um so feststellen zu können, welche Referenz-Drehmomentverläufe in der Referenzdatenbank GRD für einen Vergleich herangezogen werden können. Danach erfolgt der Bearbeitungsvorgang MAN und parallel dazu die Erfassung der Stromaufnahme während der seriellen Bearbeitung der Werkstücke. Aus der Stromaufnahme wird das entsprechende Drehmoment des Antriebes ermittelt.

Es ist vorteilhaft, wenn für die Durchführung der Erfindung Computer eingesetzt werden und insbesondere für die Erfassung der Stromaufnahme und weitere Datenverarbeitungsschritte Edge-Computing vorgesehen wird.

Beim Edge-Computing werden Computer-Anwendungen, Daten und Dienste von zentralen Rechenzentren weg verlagert. Wesentliche Operationen werden dezentral dort vorgenommen, wo die Daten tatsächlich entstehen beziehungsweise erhoben werden

Damit werden Datenströme ressourcenschonend zumindest teilweise an Ort und Stelle verarbeitet, Verzögerungen in der Datenübertragung verhindert und die Reaktionszeiten verringert.

Edge Devices sind daher in der Lage, kontinuierlich hochfrequente Maschinendaten wie die beispielsweise mittels sogenanntem Compile-Zyklus erhaltenen Daten eines Hochfrequenzsensors aus der Steuerung einer Werkzeugmaschine zu erfassen.

Compile-Zyklen bieten die Möglichkeit, steuerungsrelevante Daten wie Soll- und Istwerte der Strom- und Spannungsaufnahme, Drehzahlwerte oder das erzeugte Drehmoment jeder einzelnen Maschinenachse auszulesen.

Die Verbindung zwischen Edge Device und Maschine kann über die Standard-Netzwerkverbindungen erfolgen.

Am Beispiel einer Drehmaschine soll die Erfindung näher erläutert werden.

Mit einer Drehmaschine werden rotationssymmetrische Werkstücke wie beispielsweise zylindrische Teile, Kegel- oder Kugelflächen gefertigt.

Das Werkstück führt durch Rotation die Schnittbewegung aus, während das Werkzeug, der Drehmeißel, fest auf den Werkzeugschlitten gespannt ist und mit ihm die Vorschubbewegung ausführt.

Während der Span abgehoben wird, indem der Schlitten längs oder auch quer zur Rotationsachse des Werkstücks entlang der zu bearbeitenden Fläche bewegt wird, leistet das bearbeitete Material Widerstand, der durch ein entsprechendes Drehmoment des Antriebes, eines Elektromotors überwunden werden muss.

Dieses Drehmoment bestimmt wiederum die Stromaufnahme des Antriebes. Im Fall von Inhomogenitäten des Werkstückes, wie sie bei Einschlüssen von Fremdkörpern, Lunkern, Haarrissen oder fehlerhaften Festigkeitseigenschaften auftreten, so schwankt der Widerstand, den das Material dem Bearbeitungsvorgang entgegensetzt, und damit auch die Stromaufnahme des Antriebes.

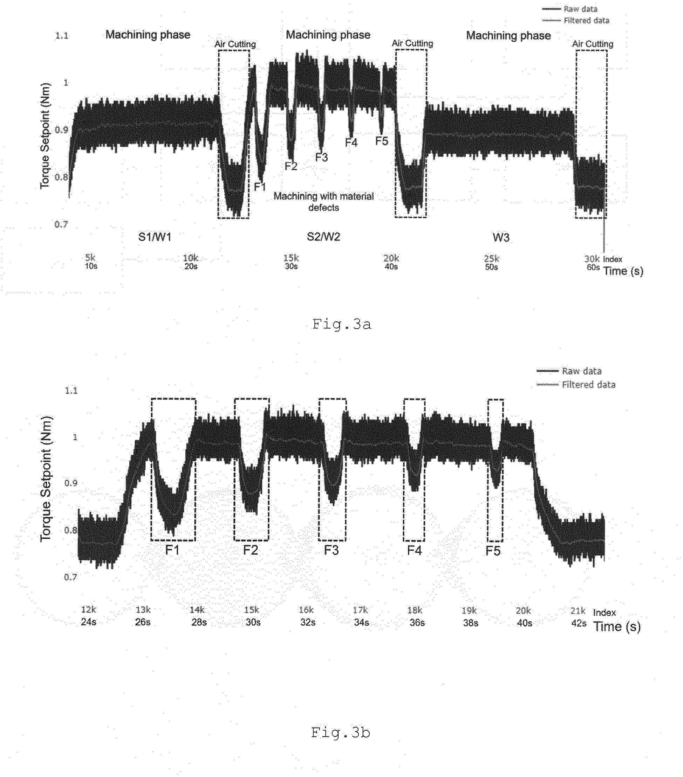

Fig. 3a zeigt nun den Verlauf der Rohdaten Raw data und geglätteten Daten filtered data des Drehmomentes eines Antriebes bei der seriellen Bearbeitung eines Werkstückes. Während beim ersten und dritten Bearbeitungsvorgang S1, S3 keine Fehler auftreten und damit der Drehmomentverlauf nur geringe Schwankungen aufweist, treten bei dem zweiten Bearbeitungsvorgang S2 fünf Fehlerstellen F1, F2, F3, F4, F5 auf, die als Anomalien im Signalverlauf erscheinen. Wie in Fig. 3b detaillierter dargestellt, weist der Bearbeitungsvorgang bei diesen Fehlerstellen F1, F2, F3, F4, F5 reduziertes Drehmoment auf, was typisch für einen Lunker ist.

Erfindungsgemäß wird die Stromaufnahme als Betriebsparameter kontinuierlich erfasst, daraus das entsprechende Drehmoment ermittelt, und aus erkannten Abweichungen von Referenz-Drehmomentverläufen Rückschlüsse auf Fehler der Werkstücke getroffen.

Für die automatische Erkennung derartiger Abweichungen DDN wird die den Drehmomentenverlauf darstellende Signalfolge in Abschnitte S1, S2, S3 unterteilt, die einzelnen unterschiedlichen Bearbeitungsvorgängen zugeordnet werden können. Danach wird das Signal geglättet filtered data . Dies kann beispielsweise durch Bildung eines gleitenden Mittelwertes d.h. durch ein FIR- Tiefpassfilter geschehen.

Wie in Figur 2 dargestellt, umfasst der Erkennungsvorgang 4 Stufen; die Vorverarbeitung der Signalfolgen PP, die Identifikation einer Anomalie im Signalverlauf bzw. des zugrundeliegenden Fehlers DA, die Überprüfung und ggf. Bestätigung CC und die Quantifizierung QU.

Beim Ausführungsbeispiel erfolgt die Identifikation einer Fehlers DDN mittels Pearson Korrelationskoeffizienten mit dem der lineare Zusammenhang zwischen einem Referenz-Drehmomentverlauf und dem Drehmomentverlauf des zu bewertenden Bearbeitungsvorganges ermittelt wird.

Dazu wird vorab ein Referenzwert durch Vergleich zumindest zweier Signalfolgen ermittelt, die bei der Bearbeitung von zwei Referenzstücken und der Erfassung SPR der zugehörigen Drehmomentverläufe als Referenz-Drehmomentverläufe gespeichert wurden. Der Referenzwert bildet mit einer Toleranzgrenze von +/- 5% einen Sollbereich für den Pearson Korrelationskoeffizienten. Solange dieser Koeffizient bei Vergleich einer Signalfolge mit einem Referenz-Drehmomentverlauf innerhalb des Sollbereichs liegt, wird davon ausgegangen, dass der entsprechende Drehmomentverlauf keinen Hinweis auf einen Fehler des bearbeiteten Werkstücks enthält.

Ergibt der Pearson Korrelationskoeffizienten hingegen einen Wert, der um mehr als 5 % vom Referenzwert abweicht, dann liegt ein klarer Hinweis auf ein fehlerhaftes Werkstück vor.

Dieser vermutete Fehler wird überprüft und ggf. bestätigt CC. Beim Ausführungsbeispiel wird dazu die Methode der Complexity-Invariant Distance angewandt.

$$ED(Q,C) = \sqrt{\sum_{i=1}^{n}(q_i - c_i)^2} \quad \Rightarrow \quad CE(Q) = \sqrt{\sum_{i=1}^{n-1}(q_i - q_{i+1})^2} \quad \Rightarrow \quad CF(Q,C) = \frac{\max\left(CE(Q), CE(C)\right)}{\min\left(CE(Q), CE(C)\right)} \quad \Rightarrow \quad CID(Q,C) = ED(Q,C) \times CF(Q,C)$$

Dem Einsatz dieser Methode liegt die Annahme zugrunde, dass zwei Drehmomentverläufe bzw. die entsprechenden Signalfolgen bei fehlerfreien Werkstücken annähernd dieselbe Komplexitätserwartung und einen Komplexitätsfaktor nahe 1,0 aufweisen, und der Wert der Complexity-Invariant Distance geringer ist als bei einem Vergleich eines Signalfolge zu einem fehlerfreien Werkstück mit einem Signalfolge zu einem fehlerbehafteten Werkstück.

Im letzten Schritt QU wird nun der Fehler quantifiziert, d.h. es wird festgestellt, wie viele Fehlerstellen das Werkstück aufweist. Dies kann vorzugsweise mit dem sogenannten Isolation-Forest Algorithmus geschehen.

Das Ergebnis wird ausgegeben und das fehlerhafte Werkstück aus dem weiteren Bearbeitungsprozess ASY ausgeschieden und einer Endkontrolle EOL zugeführt, die ggf. auch manuell erfolgen kann.

Für die einzelnen Schritte des erfindungsgemäßen Verfahrens können auch andere Verfahren als die beiden genannten vorgesehen werden. Grundsätzlich eignen sich alle Verfahren, die einen erfolgreichen Mustervergleich ermöglichen. Beispielhaft seien hier erwähnt: Dynamic time warping, Auto regressor, Filter, Empirical mode component analysis.

Bezugszeichenliste

| | |
|---|---|
| REF | Bearbeitung von Referenzstücken |
| SPR | Erfassung der Drehmomentverläufe |
| GRD | Referenzdatenbank |
| SNC | Bestimmung der Bearbeitungsschritte |
| MAN | Fertigungsvorgang |
| DDN | Fehlererkennung |
| ASY | Weiterverarbeitung |
| EOL | Endkontrolle |
| PP | Vorverarbeitung der Signalfolgen |
| DA | Identifikation eines Fehlers |
| CC | Überprüfung und ggf. Bestätigung |
| QU | Quantifizierung |
| S1,S2,S3 | Abschnitte der Signalfolgen |
| F1, F2, F3, F4, F5 | Fehler |
| Raw data | Rohdaten des Drehmomentverlaufes |
| Filtered data | Geglättete Daten des Drehmomentverlaufes |

**Patentansprüche**

1.  Verfahren zur Detektion von Fehlern während eines Herstellungsprozesses in Fertigungsanlagen, wobei die Fertigungsanlagen Werkzeuge zur Bearbeitung von Werkstücken umfassen, **dadurch gekennzeichnet, dass** Betriebsparameter der Werkzeuge während der Bearbeitung von Werkstücken kontinuierlich ermittelt (raw data) und aus Abweichungen der Betriebsparameter bei der Bearbeitung unterschiedlicher Werkstücke Rückschlüsse auf Fehler der Werkstücke getroffen werden.

2.  Verfahren nach Anspruch 1, **dadurch gekennzeichnet, dass** Werkzeuge zur spanabhebenden Bearbeitung der Werkstücke vorgesehen sind und dass als Betriebsparameter die Drehmomentverläufe (raw data) des Antriebs der Werkzeuge erfasst werden.

3.  Verfahren nach Anspruch 1 oder 2, **dadurch gekennzeichnet, dass** zumindest ein Betriebsparameter als Signalfolge dargestellt wird, dass für die Bearbeitung jedes Werkstückes ein zugehöriger Abschnitt der Signalfolge ermittelt wird, dass die, unterschiedlichen Werkstücken zugeordneten Signalfolgen miteinander verglichen werden und aus dem Ergebnis des Vergleichs Rückschlüsse auf Fehler der Werkstücke getroffen werden.

4.  Verfahren nach Anspruch 3, **dadurch gekennzeichnet, dass** der Vergleich der, unterschiedlichen Werkstücken zugeordneten Signalfolgen miteinander die folgenden Verfahrensschritte aufweist:

    - Vorverarbeitung mit Filterung (PP)
    - Identifikation des Fehlers (DA)
    - die Überprüfung und ggf. Bestätigung (CC) und die
    - Quantifizierung (QU).

5.  Verfahren nach einem der Ansprüche 1 bis 4, **dadurch gekennzeichnet, dass** für den Vergleich die Signalfolgen des Drehmomentverlaufes mittels laufender Mittelwertbildung geglättet werden (filtered data) und dass zur Identifikation eines Fehlers der lineare Zusammenhang zwischen den Signalfolgen mittels Pearson Korrelationskoeffizienten ermittelt wird.

6. Verfahren nach Anspruch 4 oder 5, **dadurch gekennzeichnet, dass** im Falle eines vermuteten Fehlers eine Überprüfung und ggf. Bestätigung mittels der Methode der Complexity-Invariant Distance erfolgt.

7. Verfahren nach einem der Ansprüche 4 bis 6, **dadurch gekennzeichnet, dass** zur Quantifizierung vermuteter Fehler der Isolation-Forest Algorithmus herangezogen wird.

8. Computerimplementiertes Verfahren nach einem der Ansprüche 1 bis 7, **dadurch gekennzeichnet, dass** Edge-Computing vorgesehen ist.

```
┌─────────┐      ┌─────────┐      ┌─────────┐
│   REF   │─────▶│   SPR   │      │   GRD   │
│         │      │         │──┬──▶│         │
└─────────┘      └─────────┘  │   └─────────┘
     ▲                        │        │
     └────────────────────────┘        │
                              ┌─────────┘
┌─────────┐      ┌─────────┐  │   ┌─────────┐      ┌─────────┐
│   SNC   │─────▶│   MAN   │──⊕─▶│   DDN   │─────▶│   ASY   │
│         │      │         │     │         │      │         │
└─────────┘      └─────────┘     └─────────┘      └─────────┘
                                      │                │
                                      │           ┌─────────┐
                                      └──────────▶│   EOL   │
                                                  │         │
                                                  └─────────┘
```

Fig.1

Fig.2

Fig.3a

Fig.3b

Europäisches
Patentamt

European
Patent Office

Office européen
des brevets

# EUROPÄISCHER RECHERCHENBERICHT

Nummer der Anmeldung

EP 24 15 8526

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2020 205895 A1 (IBA AG [DE]) 11. November 2021 (2021-11-11) * Absatz [0001] - Absatz [0069] * - - - - - | 1-8 | INV. G05B19/418 G05B19/4063 G05B23/02 |
| X | US 2019/180152 A1 (KROMPASS DENIS [DE] ET AL) 13. Juni 2019 (2019-06-13) * Absatz [0027] - Absatz [0055] * - - - - - | 1-8 | |
| X | WO 2020/200903 A1 (SIEMENS AG [DE]) 8. Oktober 2020 (2020-10-08) * Seite 7, Zeile 5 - Seite 17, Zeile 28 * - - - - - | 1-8 | |
| A | US 2021/286348 A1 (JALLURI CHANDRA SEKHAR [US] ET AL) 16. September 2021 (2021-09-16) * Absatz [0032] - Absatz [0066] * - - - - - | 1-8 | |
| A | DE 10 2019 107363 A1 (SCHAEFFLER TECHNOLOGIES AG [DE]) 24. September 2020 (2020-09-24) * Absatz [0015] * - - - - - | 5-7 | RECHERCHIERTE SACHGEBIETE (IPC) |
| A | WO 2023/016616 A1 (UNIVERSAL ROBOTS AS [DK]) 16. Februar 2023 (2023-02-16) * Absatz [0201] * - - - - - | 5-7 | G05B B23Q |

Der vorliegende Recherchenbericht wurde für alle Patentansprüche erstellt

| Recherchenort | Abschlußdatum der Recherche | Prüfer |
|---|---|---|
| Den Haag | 26. Juni 2024 | Ćirić, George |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.......................................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 24 15 8526

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-06-2024

| Im Recherchenbericht angeführtes Patentdokument | Datum der Veröffentlichung | Mitglied(er) der Patentfamilie | Datum der Veröffentlichung |
|---|---|---|---|
| DE 102020205895 A1 | 11-11-2021 | KEINE | |
| US 2019180152 A1 | 13-06-2019 | CN 109947072 A | 28-06-2019 |
| | | EP 3499329 A1 | 19-06-2019 |
| | | JP 6832327 B2 | 24-02-2021 |
| | | JP 2019135638 A | 15-08-2019 |
| | | US 2019180152 A1 | 13-06-2019 |
| WO 2020200903 A1 | 08-10-2020 | CN 113678076 A | 19-11-2021 |
| | | EP 3715989 A1 | 30-09-2020 |
| | | EP 3899679 A1 | 27-10-2021 |
| | | ES 2941356 T3 | 22-05-2023 |
| | | US 2022197273 A1 | 23-06-2022 |
| | | WO 2020200903 A1 | 08-10-2020 |
| US 2021286348 A1 | 16-09-2021 | DE 102021105299 A1 | 16-09-2021 |
| | | US 2021286348 A1 | 16-09-2021 |
| DE 102019107363 A1 | 24-09-2020 | CN 113424120 A | 21-09-2021 |
| | | DE 102019107363 A1 | 24-09-2020 |
| | | EP 3942376 A1 | 26-01-2022 |
| | | HU E064066 T2 | 28-02-2024 |
| | | PL 3942376 T3 | 26-02-2024 |
| | | US 2022187787 A1 | 16-06-2022 |
| | | WO 2020192822 A1 | 01-10-2020 |
| WO 2023016616 A1 | 16-02-2023 | EP 4384359 A1 | 19-06-2024 |
| | | WO 2023016616 A1 | 16-02-2023 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19834797 C2